# EUROPÄISCHE PATENTSCHRIFT

(11) **EP 1 752 037 B1**
(45) Veröffentlichungstag und Bekanntmachung des Hinweises auf die Patenterteilung: **07.01.2009**
(21) Anmeldenummer: 06011615.9
(22) Anmeldetag: 06.06.2006
(51) Int. Cl.: A01D 43/08, A01D 43/073

(54) **Verfahren zum Überladen von Erntegut**
Method for overloading of agricultural produce
Méthode pour le transbordement des produits agricoles

(30) Priorität: 12.08.2005 DE 102005038553
(43) Veröffentlichungstag der Anmeldung: 14.02.2007
(73) Patentinhaber: CLAAS Selbstfahrende Erntemaschinen GmbH, 33428 Harsewinkel (DE)
(72) Erfinder: Isfort, Heinrich, 48249 Dülmen (DE)

(56) Entgegenhaltungen:
- EP-A- 1 145 616
- EP-A- 1 380 204
- EP-A- 1 393 613
- EP-A- 1 405 555
- EP-A1- 0 760 202

## Beschreibung

Die Erfindung betrifft ein Verfahren zum Überladen von Erntegut von einer Erntemaschine auf ein Transportfahrzeug, bei dem das Erntegut beschleunigt und durch einen Förderschacht einer Überladeeinrichtung auf einen Zielpunkt auf dem Transportfahrzeug ausgeworfen wird. Darüber hinaus betrifft die Erfindung eine entsprechende Steuereinrichtung für eine Erntemaschine sowie eine Erntemaschine, insbesondere einen Feldhäcksler, mit einer Überladeeinrichtung und mit einer derartigen Steuereinrichtung.

Selbstfahrende Erntemaschinen wie beispielsweise Feldhäcksler, Mähdrescher und dergleichen weisen üblicherweise eine Überladeeinrichtung auf, z. B. mit einem Auswurfkrümmer oder einem Korntankentleerungsrohr, mit der das Erntegut von der Erntemaschine auf ein Transportfahrzeug übergeladen wird. Wenn das geerntete Gut während einer Erntefahrt kontinuierlich übergeladen werden soll, wie dies beispielsweise bei einem Feldhäcksler in der Regel der Fall ist, muss das Transportfahrzeug während der Emtefahrt parallel neben oder hinter der Erntemaschine herfahren. Hierzu kann ein außen an der Maschine befestigter Teil des Förderschachts der Überladeeinrichtung - bei einem Feldhäcksler der Auswurfkrümmer - durch die Verschwenkung um die vertikale und die horizontale Achse so positioniert werden, dass der ausgeworfene bzw. auslaufende Gutstrom an dem gewünschten Zielpunkt auf das Transportfahrzeug trifft. Dabei muss bei der ersten Einfahrt eines Feldhäckslers in das abzuerntende Feld das Transportfahrzeug in der Regel hinter dem Feldhäcksler herfahren, da neben ihm kein Platz für das Transportfahrzeug ist. Sobald eine erste Spur im Feld abgeerntet ist, kann das Transportfahrzeug dann neben dem Feldhäcksler herfahren. In Abhängigkeit von der jeweiligen Position des Transportfahrzeugs relativ zur Erntemaschine variiert naturgemäß der Überladeabstand, d. h. der Abstand zwischen der Erntemaschine und dem Zielpunkt, auf den der Gutstrom auf dem Transportfahrzeug auftrifft, erheblich. In Abhängigkeit von dem Überladeabstand muss das Erntegut mal weniger weit und mal weiter aus dem Förderschacht ausgeworfen werden. Wenn das Transportfahrzeug neben der Erntemaschine herfährt, reicht es beispielsweise aus, wenn das Erntegut einfach aus dem Förderschacht nach unten herausfällt, da der Förderschacht üblicherweise bis über das Transportfahrzeug reicht Fährt dagegen das Transportfahrzeug hinter der Erntemaschine her, so muss ein relativ weiter Weg vom auswurfseitigen Ende des Förderschachts bis zum Zielpunkt auf dem Transportfahrzeug zurückgelegt werden, um z. B. einen Schlepper, welcher einen Transportanhänger zieht, zu überbrücken. Aus dem Förderschacht wird dabei ein relativ schneller, "scharfer" Gutstrom ausgeworfen, damit das relativ leichte Erntegut den Zielpunkt ohne allzu große Verluste erreicht und nicht durch Wind gestreut wird und verloren geht. Um das Erntegut auf die notwendige Geschwindigkeit zu bringen, muss es entsprechend beschleunigt werden. Diese Beschleunigung erfolgt zum einen bereits zwangsläufig durch die Bearbeitungsorgane, beispielsweise bei einem Feldhäcksler durch die Häckseltrommel und eventuelle Konditioniereinrichtungen wie z. B. den Korncräcker zum Anschlagen von Maiskörnern. Diese Arbeitsaggregate sorgen gleichzeitig für eine Weiterbeförderung des Gutstroms innerhalb der Erntemaschine mit einer bestimmten Geschwindigkeit. Die durch die Ärbeitsaggregate erzielte Geschwindigkeit reicht aber in der Regel allein nicht aus, um das Erntegut durch den Förderschacht und insbesondere über eine längere Strecke als schnellen Erntegutstrahl durch die Luft zu befördern. Daher sind beispielsweise Feldhäcksler üblicherweise mit einem Nachbeschleunigungsorgan ausgestattet, welches im Eingangsbereich des Förderschachts oder unmittelbar vor dem Förderschacht angeordnet ist. Ein Beispiel für ein solches Nachbeschleunigungsorgan ist in der EP 1 380 204 A1 beschrieben. In einem solchen Nachbeschleunigungsorgan wird das Erntegut immer auf eine solche Geschwindigkeit beschleunigt, mit der es auch über eine sehr weite Strecke aus dem Förderschacht durch die Luft transportiert werden kann. Die Einstellung der genauen Flugbahn erfolgt dann durch die Höhenverstellung des Auswurfkrümmers und durch die Einstellung einer endseitig am Auswurfkrümmer angeordneten Auswurfklappe, wodurch dem ausgeworfenen Erntegutstrahl die gewünschte Richtung auf den Zielpunkt gegeben wird. Für diese Nachbeschleunigung des Ernteguts wird relativ viel Energie aufgewendet.

Es ist eine Aufgabe der vorliegenden Erfindung, ein Verfahren zum Überladen von Erntegut von einer Erntemaschine auf ein Transportfahrzeug sowie eine entsprechende Steuereinrichtung für eine Erntemaschine und eine Erntemaschine mit einer solchen Steuereinrichtung anzugeben, welche ein energieeffizienteres Überladen ermöglichen.

Diese Aufgabe wird zum einen durch ein Verfahren gemäß Patentanspruch 1 und zum anderen durch eine Steuereinrichtung gemäß Patentanspruch 9 sowie eine Erntemaschine gemäß Patentanspruch 10 gelöst.

Erfindungsgemäß wird hierbei dafür gesorgt, dass - abweichend von der bisher üblichen Praxis, bei der das Erntegut immer auf eine möglichst hohe Geschwindigkeit gebracht wird - nun die Beschleunigung des Ernteguts zum Überladen in Abhängigkeit von zumindest einem Parameter gesteuert wird, welcher ein Maß für einen Überladeabstand bildet. Auf diese Weise kann dafür gesorgt werden, dass einerseits bei einem sehr großen Überladeabstand das Erntegut wie bisher auf eine hohe Geschwindigkeit gebracht wird, so dass der Zielpunkt vom Erntegutstrom ohne große Verluste erreicht wird. Andererseits kann aber in Überladesituationen, in denen das Erntegut beispielsweise nur noch aus dem Überladeschacht "herausfallen" muss, darauf verzichtet werden, das Erntegut stark zu beschleunigen und hierfür unnötig Energie aufzuwenden. Dies ist insbesondere deshalb attraktiv, weil - wie eingangs erläutert - nur in relativ wenigen Situationen das Transportfahrzeug hinter der Erntemaschine herfährt und ein großer Überladabstand überbrückt werden muss. In den meisten Fällen, nämlich immer dann, wenn das Transportfahrzeug neben der Erntemaschine herfährt, muss dagegen nur ein geringer Überladeabstand überbrückt werden. Während eines überwiegenden Teils der Erntezeit kann folglich mit Hilfe des erfindungsgemäßen Verfahrens eine erhebliche Energiemenge eingespart werden.

Die Erfindung ist besonders vorteilhaft bei einem Einsatz an Feldhäckslern geeignet, da hier das Erntegut üblicherweise sofort auf ein nebenher fahrendes Transportfahrzeug ausgeworfen wird. Grundsätzlich ist aber nicht ausgeschlossen, das erfindungsgemäße Verfahren auch bei einer Überladung von Erntegut aus Erntemaschinen mit einem Emteguttank einzusetzen.

Eine erfindungsgemäß ausgestaltete Steuereinrichtung kann vorzugsweise in Form von Software auf einer Rechnereinheit, beispielsweise im üblichen Steuerprozessor der Erntemaschine, realisiert werden.

Die abhängigen Ansprüche enthalten besonders vorteilhafte Ausgestaltungen und Weiterbildungen der Erfindung.

Bei einem Ausführungsbeispiel wird die Beschleunigung des Ernteguts zum Überladen gesteuert, indem zumindest ein Parameter eines Gutbearbeitungsorgans der Erntemaschine - z. B. bei einem Feldhäcksler, der Häckseltrommel oder einer nachgeschalteten Konditioniereinrichtung - unter Berücksichtigung des betreffenden Parameters, welcher das Maß für den Überladeabstand bildet, gesteuert wird. D. h. dass bei der Steuerung dieser Parameter nicht nur wie üblich der Emtegutdurchsatz oder die Fahrgeschwindigkeit etc. herangezogen werden, sondern zusätzlich auch der Überladeabstand berücksichtigt wird.

Bei einem besonders bevorzugten Ausführungsbeispiel wird jedoch das Erntegut in einem separaten Förderorgan nachbeschleunigt. Erfindungsgemäß wird dann dieses Förderorgan in Abhängigkeit von dem betreffenden Parameter, welcher das Maß für den Überladeabstand bildet, gesteuert. Bei dem Förderorgan handelt es sich bevorzugt um ein in dem Förderschacht vorzugsweise eingangsseitig angeordnetes Nachbeschleunigungsorgan, beispielsweise eine Nachbeschleunigungstrommel. Alternativ kann dieses Nachbeschleunigungsorgan auch unmittelbar vor dem Förderschachteingang angeordnet sein. Besonders bevorzugt ist das Nachbeschleunigungsorgan innerhalb eines Nachbeschleunigungsorgan-Maschinengehäuses, beispielsweise im Förderschacht, bewegbar, so dass eine Spaltbreite zwischen dem Nachbeschleunigungsorgan und einer Wand des Maschinengehäuses einstellbar ist. Ein entsprechend eingerichtetes Nachbeschieunigungsorgan ist in der bereits eingangs zitierten EP 1 380 204 A1 beschrieben. Die durch das Nachbeschleunigungsorgan erreichte Beschleunigung des Ernteguts kann dann durch Einstellung der Spaltbreite gesteuert werden.

Alternativ oder zusätzlich ist die Beschleunigung des Ernteguts bevorzugt auch durch eine Steuerung der Drehzahl des Nachbeschlaunigungsorgans steuerbar.

Eine weitere bevorzugte Möglichkeit, die durch das Nachbeschleunigungsorgan erreichte Beschleunigung des Ernteguts zu steuern, besteht darin, die Stellung von Schaufeln des Nachbeschleunigungsorgans anzusteuern.

Eine weitere Alternative besteht darin, die Luftzuführung durch das Nachbeschleunigungsorgan zu steuern. Bei herkömmlichen Feldhäckslern wird durch an den stirnseitigen Enden der Nachbeschleunigertrommel befindliche Belüftungsöffnungen vom Nachbeschleuniger Luft angesaugt und dadurch Luft in den Gutstrom eingebracht. Bei einem bevorzugten Ausführungsbeispiel der Erfindung wird nun dafür gesorgt, dass die Luftzufuhröffnungen in ihrer Weite stufenweise oder kontinuierlich verstellbar sind, so dass die Luftmenge, die vom Nachbeschleuniger in den Gutstrom eingebracht wird, gezielt geregelt werden kann. Vorzugsweise kann diese Verstellung der Luftzufuhröffnungen mit Hilfe geeigneter Stellmittel automatisch erfolgen.

Bei einem besonders bevorzugten Ausführungsbeispiel wird die Beschleunigung des Ernteguts zusätzlich auch in Abhängigkeit von Ernteparametern und/oder Emteguteigenschaften gesteuert. Zu den Ernteparametern zählt beispielsweise der Emtegutdurchsatz, mit dem jeweils die auszuwerfende Erntegutmenge gekoppelt ist. Ebenso zählen hierzu auch die Fahrgeschwindigkeit und gegebenenfalls Umweltbedingungen wie z. B. der Wind, dem das Erntegut auf dem Weg vom auswurfseitigen Ende des Förderschachts zum Zielpunkt ausgesetzt ist. Zu den Emteguteigenschaften gehören insbesondere die Feuchte und Dichte des Ernteguts. Dabei ist es nicht nur möglich, das Ausmaß der Beschleunigung in Abhängigkeit von den Emteguteigenschaften zu steuern, sondern auch die Art, wie die Beschleunigung erfolgt. So macht es beispielsweise Sinn, bei einem trockenen Erntegut die Beschleunigung durch eine größere Luftzufuhr zu erreichen, da trockenes Erntegut leichter und nicht so dicht ist und daher gut durch Luftzufuhr förderbar ist, wogegen bei einem relativ feuchten und somit schwereren Erntegut bzw. bei einem dichteren Erntegut die Schaufelstellung und die Drehzahl des Nachbeschleunigungsorgans so geregelt werden sollten, dass das Gut durch die Schaufeln beschleunigt wird, da sich feuchtes, dichtes Erntegut besser werfen lässt.

Als Parameter, welche ein Maß für einen Überladeabstand bilden, können verschiedenste Parameter herangezogen werden.

So ist es beispielsweise möglich, den Überladeabstand mehr oder weniger exakt direkt zu vermessen. Dies kann beispielsweise mit Hilfe von an der Erntemaschine - insbesondere am auswurfseitigen Ende des Förderschachts - befindlichen Sensoren, einer Kamera oder dgl. sowie einer entsprechenden Verarbeitung der damit gemessenen Daten erfolgen. Bei einem weiteren, besonders komfortablen Beispiel werden die Erntemaschine und das Transportfahrzeug mit Positionsbestimmungseinrichtungen, beispielsweise GPS oder Galileo-Empfängern oder dergleichen, ausgestattet, um so die absoluten Positionen der beiden Fahrzeuge innerhalb eines vorgegebenen Koordinatensystems zu ermitteln und daraus den Überladeabstand zu berechnen.

Da jedoch ohnehin bei den meisten Erntemaschinen zumindest ein Teil des Förderschachts, beispielsweise bei einem Feldhäcksler der Auswurfkrümmer, so positioniert werden muss, dass das Erntegut sicher am gewünschten Zielpunkt auf dem Transportfahrzeug auftrifft, wird bei einem besonders bevorzugten Ausführungsbeispiel einfach die Position des betreffenden Teils des Förderschachts als ein Maß für den Überladeabstand herangezogen. Sofern, wie dies beispielsweise bei einem üblichen Auswurfkrümmer der Fall ist, der Förderschacht an einem auswurfseitigen Ende zur Bestimmung der Wurfrichtung eine beweglich angeordnete Auswurfklappe aufweist, erfolgt die Beschleunigung des Ernteguts auch in Abhängigkeit von der Position der Auswurfklappe.

Das Heranziehen der Positionen des Förderschacht-Teils bzw. der Auswurfklappe hat den Vorteil, dass diese Positionen ohnehin bekannt sind bzw. derzeit bereits durch an der Erntemaschine befindliche Sensoren gemessen werden und somit kein zusätzlicher Aufwand zur Ermittlung des Überladeabstands notwendig ist.

Bei einem bevorzugten Ausführungsbeispiel erfolgt die Beschleunigung des Ernteguts zum Überladen in Abhängigkeit von dem/den betreffenden Parameter(n) stufenweise, d. h. es gibt mehrere Beschlsünigungsstufen.

Bei einem besonders einfachen Ausführungsbeispiel gibt es nur zwei Beschleunigungsstufen. In einer ersten Beschleunigungsstufe wird das Erntegut, wie dies bisher in Erntemaschinen üblich ist, maximal beschleunigt. Mit dieser Beschleunigungsstufe wird übergeladen, wenn das Erntegut über einen weiten Überladeabstand, beispielsweise nach hinten über einen Schlepper in einen Transportanhänger, befördert werden muss. In diesem Fall wird also z. B. das Nachbeschleunigungsaggregat in gleicher Weise wie bisher (auf voller Leistungsstufe) angesteuert. In einer zweiten Beschleunigungsstufe wird dagegen das Nachbeschleunigungsorgan überhaupt nicht zur Beschleunigung des Ernteguts eingesetzt. In diesem Fall erfolgt die Beschleunigung somit nur durch die Emtegutbearbeitungsorgane selbst. Dabei wird das Nachbeschleunigungsorgan entweder durch geeignete Verstelleinrichtungen in eine Position gebracht, in der es das Erntegut auf dem Weg von einem Arbeitsaggregat zum Förderschacht nicht behindert, oder es läuft entsprechend der in diesem Bereich bereits vorliegenden Emtegutgeschwindigkeit mit dem Erntegut mit. Diese Stufe wird beispielsweise eingeschaltet, wenn das Transportfahrzeug sehr nahe an der Erntemaschine ist, d. h. wenn nur ein kurzer Überladeabstand überbrückt werden muss.

Selbstverständlich ist es möglich, auch noch beliebige Zwischenstufen vorzusehen oder die Beschleunigung nach einer beliebigen Funktion stetig in Abhängigkeit vom Überladeabstand bzw. dem/den den Überladeabstand repräsentierenden Parameter(n) zu steuern.

Die Erfindung wird im Folgenden unter Hinweis auf die beigefügten Figuren anhand von Ausführungsbeispielen noch einmal näher erläutert. Hieraus ergeben sich noch weitere Einzelheiten und Vorteile der Erfindung. Es zeigen:
- Figur 1: einen schematischen Querschnitt durch einen Feldhäcksler,
- Figur 2: eine schematische Seitenansicht eines Feldhäckslers beim Überladen von Erntegut in einen hinter dem Feldhäcksler von einem Schlepper gezogenen Transportanhänger,
- Figur 3: eine Hinteransicht eines Feldhäckslers mit einem neben dem Feldhäcksler herfahrenden Transportwagen.
- Figur 4: eine schematische Darstellung eines Ausführungsbeispiels einer erfindungsgemäßen Steuereinrichtung.

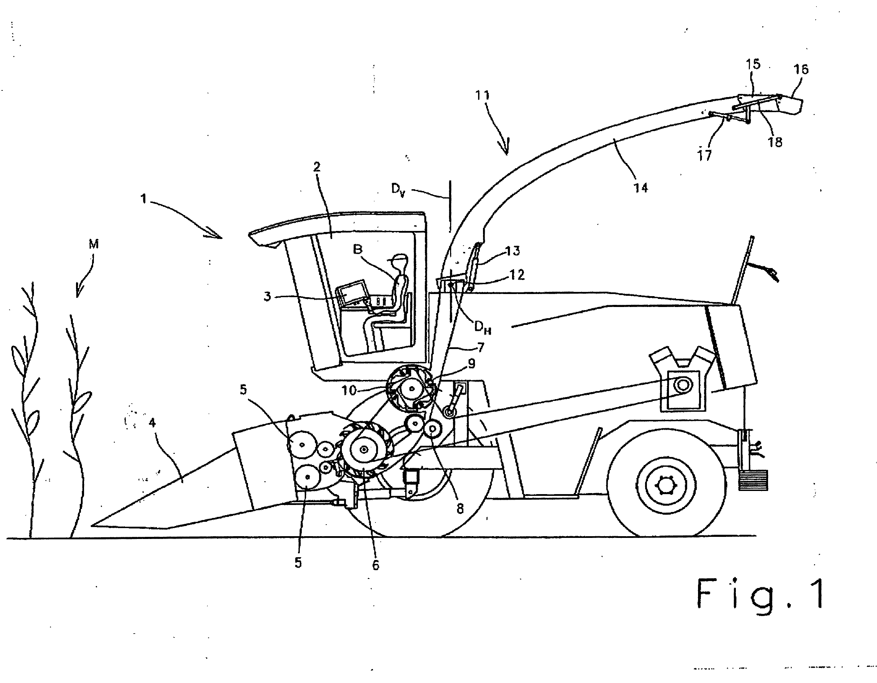

Bei den in den Figuren 1 bis 3 dargestellten Ausführungsbeispielen handelt es sich bei der Erntemaschine um einen Feldhäcksler.

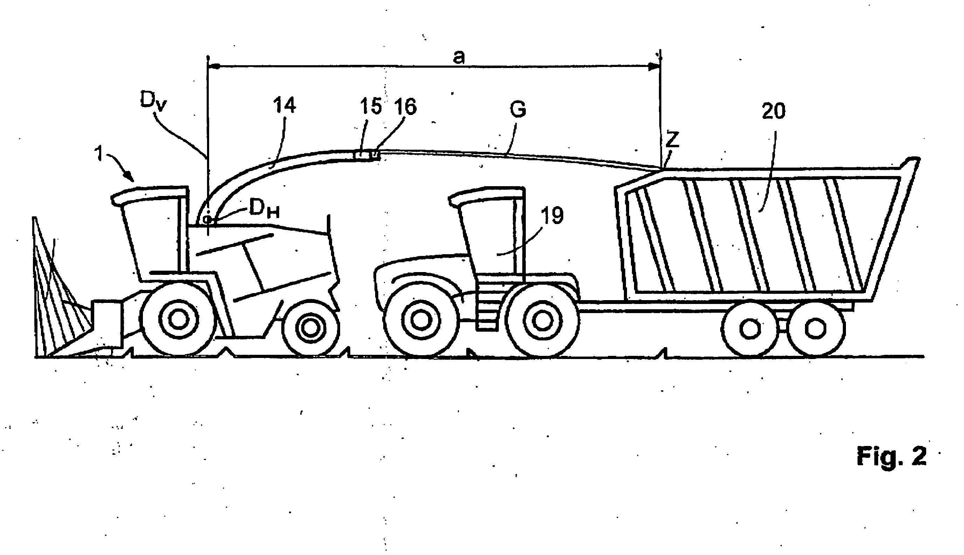

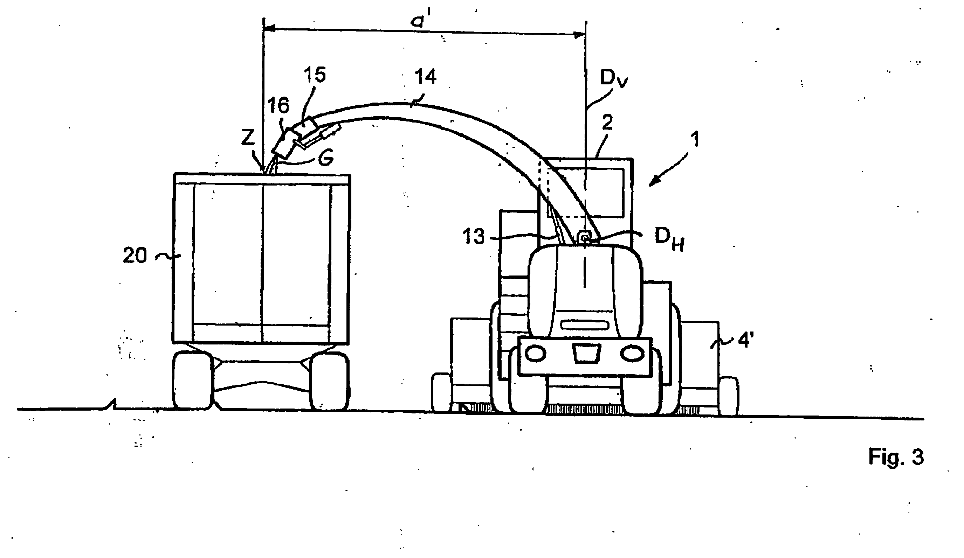

In Figur 1 ist dieser Feldhäcksler mit einem Maisgebiss 4 als Vorsatzgerät ausgestattet, welches den abzuerntenden Mais M untenseitig abschneidet und dann mit Hilfe von Fördertrommeln 5 zu einer Häckseltrommel 6 befördert. In dieser Häckseltrommel 6 werden die Maispflanzen auf eine gewünschte Schnittlänge klein gehäckselt und weiter zu einer Konditioniereinrichtung 8, einem sogenannten Korncräcker 8, geführt, welcher dafür sorgt, dass die Maiskörner angeschlagen werden. Durch den Korncräcker 8 wird das Erntegut G weiter nach oben in einen Förderschacht 7 befördert, in welchem sich eingangsseitig eine Nachbeschleunigertrommel 9 befindet. Von der rotierenden Nachbeschleunigertrommel 9 wird das Erntegut G nachbeschleunigt und über die Überladeinrichtung 11 auf ein Transportfahrzeug 20 ausgeworfen (siehe Figuren 2 und 3).

Die Überladeeinrichtung 11 besteht hier aus einem sich an den Förderschacht 7 anschließenden Auswurfkrümmer 14, welcher einen verlängerten, beweglichen Förderschacht 14 bildet. Dieser Auswurfkrümmer 14 ist, wie bei Feldhäckslern üblich, mit Hilfe eines Drehkranzes über eine vertikale Drehachse D_{V} schwenkbar an der Erntemaschine 1 angeordnet, um den Auswurfkrümmer 14 beliebig zur rechten oder zur linken Seite oder nach hinten schwenken zu können. Weiterhin ist der Auswurfkrümmer 14 mittels Gelenken 12 am Feldhäcksler 1 so befestigt, dass er um eine horizontale Drehachse D_{H} in der Höhe verschwenkbar ist. Die Höhenverstellung kann automatisch mit Hilfe eines Verstellzylinders 13 erfolgen.

Am Ende des Auswurfkrümmers 14 befindet sich eine zweiteilige Auswurfklappe 15, 16, deren einzelne Elemente jeweils durch Stellglieder 17, 18 einstellbar sind. Durch Verstellung dieser Auswurfklappe 15, 16 sowie durch die vertikale Verschwenkung des Auswurfkrümmers 14 können die Wurfbahn und Wurfweite des aus dem Auswurfkrümmer 14 ausgeworfenen Ernteguts G bestimmt werden.

Das Nachbeschleunigungsorgan 9 ist hier als rotierende Nachbeschleunigertrommel 9 ausgeführt, wobei die Drehzahl der Nachbeschleunigertrommel 9 einstellbar ist. Ebenso ist durch einen geeigneten Verstellmechanismus der Spalt zwischen der Nachbeschleunigertrommel 9 und der Gehäusewandung des Förderschachts 7 verstellbar, durch den das Erntegut G hindurchgeführt wird. Zusätzlich ist die Schaufelstellung der an der Nachbeschleunigertrommel 9 befestigten Schaufeln 10 verstellbar. Durch (nicht dargestellte) Luftzufuhröffnungen, welche sich jeweils stimseitig in den Gehäusewandungen des Maschinengehäuses der Nachbeschleunigertrommel 9 befinden und deren Öffnungsweite automatisch verstellbar ist, kann die Luftzufuhr durch die Nachbeschleunigertrommel 9 gesteuert werden.

Sämtliche Arbeits-, Förder- und Verstellorgane können von einem Bediener B, welcher sich in einer Kabine 2 des Feldhäckslers befindet, mit Hilfe einer Behutzerschnittstelle 3 gesteuert werden.

In den Figuren 2 und 3 sind unterschiedliche Überladesituationen gezeigt. Figur 2 zeigt die Situation, in der das Erntegut G aus dem Auswurfkrümmer 14 nach hinten über einen Schlepper 19 hinweg in einen von dem Schlepper 19 gezogenen Transportanhänger 20 befördert wird. In dieser Situation ist der Überladeabstand a von der Erntemaschine 1 zum Zielpunkt Z auf dem Transportanhänger 20 sehr groß, d. h. das Erntegut G muss als möglichst schneller konzentrierter Strahl über eine relativ weite Strecke befördert werden.

Als Überladeabstand a ist hier der Abstand zwischen dem durch die vertikale Drehachse D_{V} des Auswurfkrümmers 14 definierten Punkt und dem in einer definierten horizontalen Auftreffebene, beispielsweise innerhalb der durch die Ladekanten des Transportanhängers 20 vorgegebenen Ebene, liegenden Zielpunkt Z des Gutstroms definiert. Grundsätzlich kann der Überladeabstand aber auch auf beliebige andere Weise definiert werden. Entscheidend ist nur, dass hierdurch festgelegt wird, wie weit das Erntegut G von der Erntemaschine 1 zum Zielpunkt Z auf dem Transportfahrzeug 20 befördert werden muss.

Figur 3 zeigt eine andere Extremsituation, in der der Transportanhänger 20 relativ nahe neben dem Feldhäcksler 1 hergezogen wird. In diesem Fall ist der Überladeabstand a' so kurz, dass sich das auswurfseitige Ende des Auswurfkrümmers 14 unmittelbar über dem Zielpunkt Z befindet, so dass das Erntegut G nur noch aus dem Ende des Auswurfkrümmers 14 "herausfallen" muss bzw. mit relativ geringer Geschwindigkeit ausgeworfen werden kann.

In Figur 3 ist der Feldhäcksler 1 statt mit einem Maisgebiss mit einem Pick-up-Vorsatzgerät 4' ausgestattet, welches kontinuierlich Grasschwaden aufsammelt. Dieses Gras wird im Feldhäcksler 1 mit Hilfe der Häckseltrommel gehäckselt und dann über den Auswurfkrümmer 14 sofort auf das Transportfahrzeug 20 ausgeworfen. Bei einem solchen Einsatz zum Einsammeln von Gras und Häcksel von Grasschwaden wird im Gegensatz zu dem in Figur 1 dargestellten Ausführungsbeispiel keine Konditioniereinrichtung 8 benötigt. Diese ist dann aus dem Feldhäcksler 1 zuvor ausmontiert oder automatisch in eine Stellung gebracht worden, in welcher sie nicht auf das Erntegut wirkt.

Wie ein Vergleich der Figuren 2 und 3 unmittelbar zeigt, muss das Erntegut G für eine Entladung nach hinten über einen Schlepper 19 erheblich stärker beschleunigt werden, als dies beispielsweise bei einer Entladung in ein nebenher fahrendes Transportfahrzeug erforderlich wäre. Ebenso sind auch die Flugbahnen des ausgeworfenen Ernteguts G vollkommen unterschiedlich, die durch eine geeignete Höhenpositionierung des Auswurfkrümmers 14 sowie durch die passende Einstellung der Auswurfklappe 15, 16 am Ende des Auswurfkrümmers 14 bestimmt werden. Während in Figur 2 die Auswurfklappe 15, 16 gerade gestreckt am Auswurfkrümmer 14 eingestellt ist, um so eine möglichst große Wurfweite zu erreichen, ist die Auswurfklappe 15, 16 beim Überladen auf ein nebenher fahrendes Transportfahrzeug 20 mehr nach unten abgeknickt.

Sowohl die horizontale Stellung des Auswurfkrümmers 14 - d. h. ob es sich um eine seitliche Entladestellung oder eine Entladestellung nach hinten handelt - und die Höhenposition des Auswurfkrümmers 14 als auch die Position der Auswurfklappen 15, 16 sind folglich ein Maß für den Überladeabstand a, der von dem Erntegut G überbrückt werden muss. Um nun möglichst energieeffizient zu arbeiten, wird in Abhängigkeit von diesen Parametern die Beschleunigung des Ernteguts G im Feldhäcksler 1 geregelt.

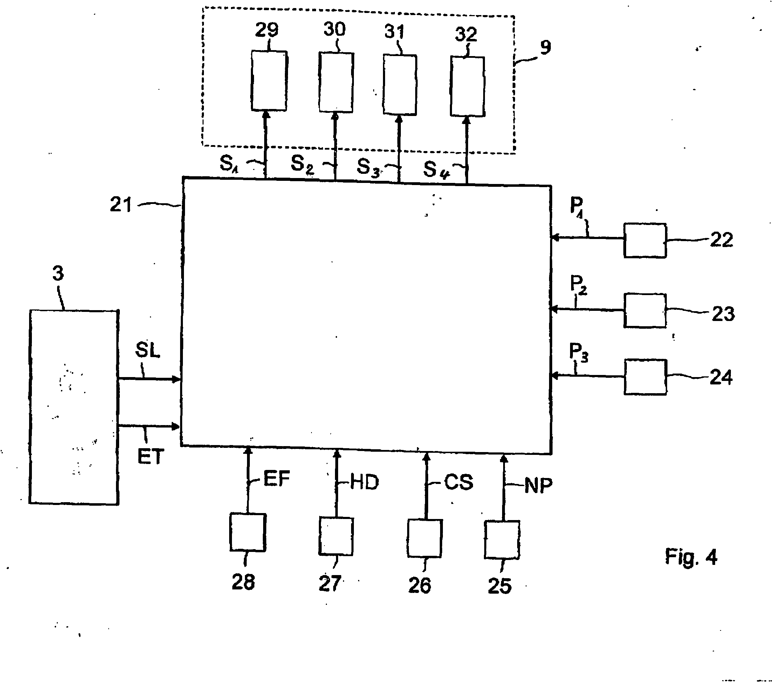

Ein mögliches Ausführungsbeispiel für eine geeignete Steuereinrichtung 21 ist in Figur 4 grob schematisch dargestellt. Die Steuereinrichtung 21 selbst ist hier nur als ein einfacher Block dargestellt, welcher als Eingangsgrößen unter anderem von einem ersten Positionssensor 22 die Positionsdaten P₁ über die horizontale Verstellung des Auswurfkrümmers 14 und über einen zweiten Positionssensor 23 die Positionsdaten P₂ über die vertikale Stellung des Auswurfkrümmers 14 erhält. Über einen weiteren Positionssensor 24 erhält die Steuereinrichtung 21 die Positionsdaten P₃ der Auswurfklappe 15, 16. Aus diesen Positionsdaten P₁, P₂, P₃ schätzt die Steuereinrichtung 21 den Überladeabstand a ab. Alternativ kann die Steuereinrichtung 21 die Positionsdaten selbstverständlich auch auf andere Weise ermitteln. Beispielsweise können, wenn über dieselbe Steuereinrichtung die verschiedenen Stellglieder 12, 17, 18 des Auswurfkrümmers 14 und der Auswurfklappe 15, 16 angesteuert werden, diese Steuerdaten auch unmittelbar herangezogen werden.

Als weitere Eingangsdaten erhält die Steuereinrichtung 21 von einem Nachbeschleuniger-Positionssensor 25 die Positionsdaten NP des Nachbeschleunigers 9 im Förderschacht 7, d. h. Daten über die Spaltbreite zwischen Nachbeschleunigertrommel 9 und benachbarter Wand des Förderschachts.

Weiterhin werden von einem Komcräcker-Sensor 26 Daten CS über den Komcräckerstatus an die Steuereinrichtung 21 geliefert, welche aussagen, ob ein Korncräcker oder eine ähnliche Konditioniereinrichtung innerhalb des Feldhäckslers 1 im Einsatz ist oder nicht. Über einen weiteren Drehzahl-Sensor 27 erhält die Steuereinrichtung 21 Daten HD über die Häckseltrommel-Drehzahl und über einen Erntegutfeuchte-Sensor 28 Informationen EF über die Erntegutfeuchte. Des Weiteren können beispielsweise vom Bediener Informationen ET über die Erntegutart und Informationen SL über die eingestellte Schnittlänge vorgegeben werden.

Anhand dieser Daten berechnet die Steuereinrichtung 21, inwieweit eine Nachbeschleunigung des Ernteguts überhaupt erforderlich ist, und stellt dann mit Hilfe von Steuersignalen S₁, S₂, S₃, S₄ verschiedene Stelleinrichtungen 29, 30, 31, 32 der Nachbeschleunigungseinrichtung 9 entsprechend ein. Das Steuersignal S₁ wird hierbei an eine Stelleinrichtung 29 zur Verstellung der Schaufelstellung der Nachbeschleunigertrommel 9 gesendet. Das zweite Steuersignal S₂ wird an die Stelleinrichtung 30 zur Einstellung der Position der Nachbeschleunigertrommel 9 im Förderschacht übermittelt, wodurch der Spalt verstellt wird. Das dritte Steuersignal S₃ wird an den Antrieb oder ein Getriebe 31 der Nachbeschleunigertrommel 9 gesendet, um so die Drehzahl der Nachbeschleunigertrommel 9 zu verstellen, und das vierte Steuersignal S₄ wird an eine Luftklappenverstelleinrichtung 32 gesendet, um so automatisch die Luftzufuhr zu steuern.

Durch die erfindungsgemäße Weise kann dann dafür gesorgt werden, dass der Feldhäcksler eine möglichst wirtschaftliche Arbeitsleistung erzielt, indem das Überladen, welches bisher mit unnötigem Energieaufwand erfolgt, besonders energieeffizient ist.

Die Steuereinrichtung 21 kann beispielsweise in Form von Software auf einem geeigneten Microcontroller ausgebildet sein. Es ist klar, dass die von der Steuereinrichtung 21 ausgehenden Steuersignale S₁, S₂, S₃, S₄ gegebenenfalls noch an die jeweiligen Stelleinrichtungen 29, 30, 31, 32 angepasst, beispielsweise von einer digitalen in eine analoge Form umgewandelt werden müssen. Das gleiche kann für die von den Sensoren 22, 23, 24, 25, 26, 27, 28 und der Benutzerschnittstelle 3 kommenden Signale P₁, P₂, P₃, NP, CS, HD, EF, SL, ET gelten, welche beispielsweise von einer analogen in eine digitale Form umgewandelt werden können. Die hierzu benötigten Einrichtungen sind aber der Übersichtlichkeit halber in Figur 4 nicht dargestellt. Sie können sowohl Teil der Steuereinrichtung 21 als auch Teil der Benutzerstelle 3 bzw. der einzelnen Stelleinrichtungen 29, 30, 31, 32 oder Sensoren 22, 23, 24, 25, 26, 27, 28 sein. Dabei kann es sich auch um separate Einheiten handeln, welche jeweils zwischen die Benutzerschnittstelle 3 bzw. Sensoren 22, 23, 24, 25, 26, 27, 28 und Stelleinrichtungen 29, 30, 31, 32 sowie die Steuereinrichtung 21 geschaltet sind.

Mittels der Steuereinrichtung 21 können darüber hinaus auch andere Arbeitsorgane und Stelleinrichtungen der Erntemaschine 1 gesteuert werden, beispielsweise die Häckseltrommel 6 oder die Konditioniereinrichtung 8. D. h. die dargestellte Steuereinrichtung 21 kann auch mit einer üblichen Steuereinrichtung, welche zur Steuerung dieser Arbeitsorgane dient, kombiniert werden. Dies macht insofern Sinn, da ja zur Regelung der Arbeitsorgane 6, 8 zum Teil die gleichen Messdaten benötigt werden wie zur erfindungsgemäßen Steuerung der Nachbeschleunigung und da bei einer Kombination der Steuerungen für die einzelnen Aggregate dafür gesorgt werden kann, dass sämtliche Aggregate gut aufeinander abgestimmt sind und die Effektivität des Gesamtsystems noch weiter erhöht werden kann.

Aus Sicherheitsgründen ist das System so ausgelegt, dass der Fahrer während eines Ernteeinsatzes jederzeit in der Lage ist, einzelne oder alle eingestellten Maschinenparameter manuell zu übersteuern. Es wird abschließend noch einmal darauf hingewiesen, dass es sich bei dem in den Figuren dargestellten Feldhäcksler und der Steuerung sowie dem im Zusammenhang damit erläuterten konkreten Verfahren lediglich, um Ausführungsbeispiele handelt, welche vom Fachmann in vielfacher Hinsicht variiert werden können, ohne den Rahmen der Erfindung zu verlassen.

### Bezugszeichenliste

- 1: Erntemaschine (Feldhäcksler)
- 2: Kabine
- 3: Benutzerschnittstelle
- 4: Maisgebiss
- 4': Pick-up-Vorsatzgerät
- 5: Fördertrommeln
- 6: Häckseltrommel
- 7: Förderschacht
- 8: Konditioniereinrichtung (Komcräcker)
- 9: Nachbeschleunigertrommel
- 10: Schaufel
- 11: Überladeinrichtung
- 12: Gelenk
- 13: Verstellzylinder
- 14: Auswurfkrümmer
- 15: Auswurtklappenteil
- 16: Auswurfklappenteil
- 17: Stellglied
- 18: Stellglied
- 19: Schlepper
- 20: Transportfahrzeug
- 21: Steuereinrichtung
- 22: Positionssensor
- 23: Positionssensor
- 24: Positionssensor
- 25: Nachbeschleuniger-Positionssensor
- 26: Korncräcker-Sensor
- 27: Drehzahl-Sensor
- 28: Emtegutfeuchte-Sensor
- 29: Stelleinrichtung

- 29: Stelleinrichtung
- 30: Stelleinrichtung
- 31: Stelleinrichtung
- 32: Stelleinrichtung
- a: Überladeabstand
- a': Überladeabstand
- B: Bediener
- D_{H}: horizontale Drehachse
- D_{V}: vertikale Drehachse
- ET: Emtegutart-Informationen
- EF: Emtegutfeuchte-Informationen
- G: Erntegut
- P₁: Positionsdaten
- P₂: Positionsdaten
- P₃: Positionsdaten
- S₁: Steuersignal
- S₂: Steuersignal
- S₃: Steuersignal
- S₄: Steuersignal
- SL: Schnittlängen-Informationen
- Z: Zielpunkt
- NP: Positionsdaten Nachbeschleuniger
- CS: Daten Korncräcker
- HD: Daten Häckseltrommeldrehzahl
- M: Mais

## Patentansprüche

1. Verfahren zum Überladen von Erntegut (G) von einer Erntemaschine (1) auf ein Transportfahrzeug (20), bei dem das Emtegut (G) beschleunigt und durch einen Förderschacht (7, 14) einer Überladeeinrichtung (11) auf einen Zielpunkt (Z) auf dem Transportfahrzeug (20) ausgeworfen wird,
**dadurch gekennzeichnet, dass**
die Beschleunigung des Emteguts (G) zum Überladen in Abhängigkeit von zumindest einem Parameter (P₁, P₂, P₃) gesteuert wird, welcher ein Maß für einen Überladeabstand (a, a') bildet.

2. Verfahren nach Anspruch 1, **dadurch gekennzeichnet, dass** das Emtegut (G) zum Überladen in einem Förderorgan (9), welches einem Gutbearbeitungsorgan (6) nachgeschaltet ist, nachbeschleunigt wird und das Förderorgan (9) in Abhängigkeit vom dem zumindest ein Parameter (P₁, P₂, P₃) gesteuert wird, der das Maß für den Überladeabstand (a, a') bildet.

3. Verfahren nach Anspruch 2, **dadurch gekennzeichnet, dass** das Förderorgan (9) ein in dem Förderschacht (7) angeordnetes Nachbeschleunigungsorgan (9) umfasst.

4. Verfahren nach Anspruch 3, **dadurch gekennzeichnet, dass** die durch das Nachbeschleunigungsorgan (9) erreichte Beschleunigung des Emteguts (G) durch eine Verstellung einer Drehzahl und/oder einer Spaltweite und/oder einer Schaufelstellung und/oder einer Luftzuführung des Nachbeschleunigungsorgans (9) gesteuert wird.

5. Verfahren nach einem der Ansprüche 1 bis 4, **dadurch gekennzeichnet, dass** die Beschleunigung des Ernteguts (G) zum Überladen gesteuert wird, indem zumindest ein Parameter eines Gutbearbeitungsorgans (6), insbesondere einer Häckseltrommel (6) und/oder einer Konditioniereinrichtung (8) der Erntemaschine (1) unter Berücksichtigung des zumindest einen Parameters (P₁, P₂, P₃) gesteuert wird, welcher ein Maß für einen Überladeabstand (a, a') bildet.

6. Verfahren nach einem der Ansprüche 1 bis 5, **dadurch gekennzeichnet, dass** die Beschleunigung des Ernteguts (G) in Abhängigkeit von Ernteparametern und/oder Ernteguteigenschaften (SL, ET, EF) gesteuert wird.

7. Verfahren nach einem der Ansprüche 1 bis 6, **dadurch gekennzeichnet, dass** zumindest ein Teil des Förderschachts (14) beweglich an der Erntemaschine (1) angeordnet ist und die Beschleunigung des Emteguts (G) in Abhängigkeit von einer Position des betreffenden Teils des Förderschachts (14) gesteuert wird.

8. Verfahren nach einem der Ansprüche 1 bis 7, **dadurch gekennzeichnet, dass** der Förderschacht (14) an einem auswurfseitigen Ende eine beweglich angeordnete Auswurfklappe (15, 16) aufweist und die Beschleunigung des Ernteguts (G) in Abhängigkeit von einer Position der Auswurfklappe (15,16) gesteuert wird.

9. Steuereinrichtung (21) für eine Erntemaschine (1), welche eine Überladeeinrichtung (11) zum Überladen von Emtegut (G) von der Erntemaschine (1) auf ein Transportfahrzeug (20) und eine Vorrichtung (6, 8, 9) aufweist, um das Emtegut (G) zu beschleunigen und durch einen Förderschacht (7, 14) der Überladeeinrichtung (11) auf einen Zielpunkt (Z) auf dem Transportfahrzeug (20) auszuwerfen,
**dadurch gekennzeichnet, dass**
die Steuereinrichtung (21) derart ausgebildet ist, dass die Beschleunigung des Emteguts (G) zum Überladen in Abhängigkeit von zumindest einem Parameter (P₁, P₂, P₃) gesteuert wird, welcher ein Maß für einen Überladeabstand (a, a') bildet.

10. Erntemaschine (1), insbesondere Feldhäcksler (1), mit, einer Überladeeinrichtung (11) und mit einer Steuereinrichtung (21) nach Anspruch 9.

## Claims

1. A method of transferring crop material (G) from a harvesting machine (1) on to a transport vehicle (20), in which the crop material (G) is accelerated and is ejected through a conveyor shaft (7, 14) of a transfer device (11) on to a target point (Z) on the transport vehicle (20),
**characterised in that**
acceleration of the crop material (G) for the transfer operation is controlled in dependence on at least one parameter (P₁, P₂, P₃) which forms a measurement in respect of a transfer spacing (a, a').

2. A method according to claim 1 **characterised in that** the crop material (G) for the transfer operation is post-accelerated in a conveyor member (9) connected downstream of a crop processing member (6) and the conveyor member (9) is controlled in dependence on the at least one parameter (P₁, P₂, P₃) which forms a measurement in respect of the transfer spacing (a, a').

3. A method according to claim 2 **characterised in that** the conveyor member (9) includes a post-acceleration member (9) in the conveyor shaft (7).

4. A method according to claim 3 **characterised in that** acceleration of the crop material (G) that is achieved by the post-acceleration member (9) is controlled by adjustment of a rotary speed and/or a gap width and/or a blade setting and/or an air feed of the post-acceleration member (9).

5. A method according to one of claims 1 to 4 **characterised in that** acceleration of the crop material (G) for the transfer operation is controlled by at least one parameter of a crop processing member (6), in particular a chopping drum (6) and/or a conditioning device (8) of the harvesting machine (1) being controlled having regard to the at least one parameter (P₁, P₂, P₃) which forms a measurement in respect of the transfer spacing (a, a').

6. A method according to one of claims 1 to 5 **characterised in that** acceleration of the crop material (G) is controlled in dependence on harvesting parameters and/or crop material properties (SL, ET, EF).

7. A method according to one of claims 1 to 6 **characterised in that** at least a part of the conveyor shaft (14) is arranged movably on the harvesting machine (1) and acceleration of the crop material (G) is controlled in dependence on a position of the part in question of the conveyor shaft (14).

8. A method according to one of claims 1 to 7 **characterised in that** at an ejection end the conveyor shaft (14) has a movably arranged ejection flap (15, 16) and acceleration of the crop material (G) is controlled in dependence on a position of the ejection flap (15, 16).

9. A control device (21) for a harvesting machine (1) which has a transfer device (11) for transferring crop material (G) from the harvesting machine (1) on to a transport vehicle (20) and a device (8, 9) for accelerating the crop material (G) and ejecting it through a conveyor shaft (7, 14) of the transfer device (11) on to a target point (Z) on the transport vehicle (20),
**characterised in that**
the control device (21) is so adapted that acceleration of the crop material (G) for the transfer operation is controlled in dependence on at least one parameter (P₁, P₂, P₃) which forms a measurement in respect of a transfer spacing (a, a').

10. A harvesting machine (1), in particular a forage harvester (1), comprising a transfer device (11) and a control device (21) according to claim 9.

## Revendications

1. Méthode de transbordement d'un produit de récolte (G) d'une machine de récolte (1) à un véhicule de transport (20), selon laquelle le produit de récolte (G) est accéléré et, à travers un puits de transport (7, 14) d'un dispositif de transbordement (11) est projeté en un point de destination (Z) sur un véhicule de transport (20), **caractérisée en ce que** l'accélération donnée au produit de récolte (G) pour assurer le transbordement est commandée en fonction d'au moins un paramètre (P₁, P₂, P₃) qui constitue une mesure de la distance de transbordement (a, a').

2. Méthode selon la revendication 1, **caractérisée en ce que** le produit de récolte (G) à transborder subit une accélération additionnelle dans un organe de transport (9) qui est disposé en aval de l'organe de travail du produit (6) et qui est commandé en fonction d'au moins un paramètre (P₁, P₂, P₃) qui constitue une mesure de la distance de transbordement (a, a').

3. Méthode selon la revendication 2, **caractérisée en ce que** l'organe de transport (9) comprend un organe d'accélération additionnelle (9) disposé dans le puits de transport (7).

4. Méthode selon la revendication 3, **caractérisée en ce que** l'accélération donnée au produit de récolte (G) par l'organe d'accélération additionnelle (9) est commandée par le réglage d'une vitesse de rotation et/ou d'une largeur de fente et/ou d'une position d'aube et/ou d'une amenée d'air de l'organe d'accélération additionnelle (9).

5. Méthode selon une des revendications 1 à 4, **caractérisée en ce que** l'accélération donnée au point de récolte (G) pour son transbordement est commandée par la commande d'au moins un paramètre de l'organe de travail du produit (6) notamment un tambour de hachage (6) et/ou un dispositif de conditionnement (8) de la machine de récolte (1), avec prise en compte d'au moins un paramètre (P₁, P₂, P₃) qui constitue une mesure de la distance de transbordement (a, a').

6. Méthode selon une des revendications 1 à 5, **caractérisée en ce que** l'accélération du produit de récolte (G) est commandée en fonction des paramètres de récolte et/ou des propriétés du produit de récolte (SL, ET, EF).

7. Méthode selon une des revendications 1 à 6, **caractérisée en ce qu'**au moins une partie du puits de transport (14) est mobile sur la machine de récolte et l'accélération du produit de récolte (G) est commandée en fonction de la position de la partie concernée du puits de transport (14).

8. Méthode selon une des revendications 1 à 7, **caractérisée en ce que** le puits de transport (14) présente à son extrémité de sortie un clapet de projection (15, 16) mobile et l'accélération du produit agricole (G) est commandée en fonction de la position du clapet de projection (15, 16).

9. Dispositif de commande (21) pour une machine de récolte (1), comportant un dispositif de transbordement (11) pour faire passer le produit de récolte (G) de la machine (1) à un véhicule de transport (20) ainsi qu'un dispositif (6, 8, 9) pour accélérer le produit de récolte (G) et, à travers un puits de transport (7, 14) du dispositif de transbordement (11) le projeter en un point de destination (Z) sur le véhicule de transport (20), **caractérisé en ce que** le dispositif de commande (21) est constitué de manière que l'accélération donnée au produit de récolte (G) pour assurer son transbordement est commandée en fonction d'au moins un paramètre (P₁, P₂, P₃) qui constitue une mesure de la distance de transbordement (a, a').

10. Machine agricole de récolte (1) notamment ramasseuse-hacheuse (1') équipée d'un dispositif de transbordement (11) et d'un dispositif de commande (21) selon la revendication 9.
